# EUROPEAN PATENT APPLICATION

(11) **EP 4 224 660 A1**
(43) Date of publication of application: **09.08.2023**
(21) Application number: 22382097.8
(22) Date of filing: 07.02.2022
(51) Int. Cl.: H02J 3/46, H02J 3/00, H02J 3/32, H02J 3/38, H02J 7/00, H02J 7/35

(54) **POWER MANAGEMENT METHOD FOR INTEGRATED CONFIGURATIONS**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Method of power management of a hybrid power plant (100) with an integrated configuration, the method comprising:
determining a power generation schedule (205) defining a power generation of the power plant (100) during a predefined time range on the basis of forecasts parameters (204);
determining a state of charge target (207) of the energy storage system (120) during the predefined time range on the basis of the forecasts parameters (204);
determining a power injection schedule (206) of the power plant (100) defining a power supply to the electrical grid (140) during the predefined time range on the basis of the power generation schedule (205);
wherein in the predefined time range the method comprises: supplying the power of the power plant (100) to the common point of connection (101) on the basis of the power injection schedule (207),
controlling the composition of the supplied power consisting of power from the renewable power generation equipment (110) and the energy storage system (120) on the basis of the power injection schedule (206) and the state of charge target (207) .

## Description

### Field of invention

The present invention relates to a method of power management for a power plant comprising at least one type of renewable power generation equipment and an energy storage system.

### Art Background

Power plants comprising renewable power generation equipment and an energy storage system are often controlled by a power management system which determines, on the basis of some forecast parameters, a power injection schedule that can be offered to a grid controller, to which the power plant is connected to, in a predefined time range. The management system transmits to a grid controller the power injection schedule, which has been determined, and then receives from the grid controller a committed power injection schedule. This committed power injection schedule represents an obligation for the power plant management system, which then controls, during the predefined time range, a power supply from the renewable power generation equipment and from the energy storage system to a common point of connection between both and the grid with the aim of meeting the committed power injection schedule. Normally, the committed power injection schedule does not allow supplying more or less power than the one foreseen in the committed power injection schedule within predefined tolerable deviation margins.

A power management method based on maintaining a specific power injection can however be disadvantageous as it tends to constantly correct the composition of the power supply, thus leading a constant cycling of the energy storage system, which is permanently charged or discharged, depending on whether the renewable power generation equipment provides enough energy to meet the committed power injection schedule or not. Furthermore, since the power management method disclosed in the prior art supplies to the common point of connection a power of the power plant according to the committed power injection schedule, power in excess from the power plant cannot be supplied to the common point of connection and must either be curtailed or stored in the energy storage system, thus increasing the energy storage system battery.

Both the disadvantages explained above lead to a higher usage of the energy storage system, which negatively affects the lifetime of the same, or to the curtailment of the produced power, thus causing financial losses.

There may be a need for improving the lifetime of the energy storage system by means of a novel method of power management of a power plant.

### Summary of the Invention

This need may be met by the subject matter according to the independent claims. Advantageous embodiments of the present invention are described by the dependent claims.

According to a first aspect of the present invention, a method of power management of a power plant comprising at least one type of renewable power generation equipment and an energy storage system, wherein the power plant comprises one common point of connection connecting the renewable power generation equipment and the energy storage system with an electrical grid is provided. The method according to this first aspect comprises the steps of:
determining a power generation schedule defining a power generation of the power plant during a predefined time range on the basis of forecasts parameters;
determining a state of charge target schedule of the energy storage system during the predefined time range on the basis of the forecasts parameters and on the basis of at least one optimization parameter;
determining a power injection schedule of the power plant defining a power supply to the electrical grid during the predefined time range on the basis of the power generation schedule and on the basis of at least one optimization parameter;
wherein in the predefined time range the method comprises: supplying the power of the power plant to the common point of connection on the basis of the power injection schedule, controlling the composition of the supplied power consisting of power from the renewable power generation equipment and the energy storage system on the basis of the power injection schedule and the state of charge target schedule.

In the present application, a power plant including at least one type of renewable power generation equipment and an energy storage system and a common point of connection connecting both the renewable power generation equipment and the energy storage system with an electrical grid is also called hybrid power plant with an integrated configuration.

An integrated configuration means that the both the renewable power generation equipment and the energy storage system share a common point of connection with the grid, and the power injection schedules are established for the whole plant, including the power from the generation and the storage resources.

In the present application, a common point of connection, also called PCC, is therefore a shared electrical connection point between the renewable power generation equipment and the energy storage system on the one side and the electrical grid on the other side.

The energy storage system may for example comprise one or more batteries or accumulators which may store electric energy in form of chemical energy and/or mechanical energy. The renewable power generation equipment may comprise or may not comprise a converter, for example to convert a DC voltage (for example of a battery or an accumulator or a photovoltaic cell) to an AC voltage having a frequency for example corresponding to a nominal frequency (for example 50 Hz or 60 Hz) of an electrical utility grid or and offgrid connection to a specific user or independent network. An energy storage system comprising only batteries is defined as battery energy storage system, also known as BESS.

In the present application, a state of charge of the energy storage system is a value representing the amount of the available energy of the energy storage system. This value can be represented as a percentage of the total possible energy capacity of the storage resource, for example 80%, or as a physical value, for example in terms of Ampere-hours (Ah) or the like.

In the present application, a state of charge target is a target value that has to be reached or maintained at each scheduled time interval. This target value can be expressed in percentage of the total possible charge of the energy storage system or as a physical value in Ah or the like. The state of charge target is chosen in such a way, that the lifetime of the energy storage system can be prolonged and the charging and discharging cycles of the energy storage system are minimized.

In the present application, the state of charge target schedule is a schedule with the target values of the state of charge that have to be maintained during the predefined time range. The state of charge target schedule is aimed to control the composition of the power supplied from the power plant to the common point of connection, being the power supplied the sum of the power coming from the renewable power generation equipment and from the energy storage system, by taking into consideration the following factors: keeping the supplied power withing tolerable limits, avoid any unnecessary power curtailment and minimize the cycling of the battery. The tolerable limits may be defined by market regulations and/or by a controller of the grid. Power curtailment is the waste of generated power, which is neither discharged to the common point of connection nor used to recharge the energy storage system.

In the present application, forecasts parameters are data and/or pieces of information that are being used to determine a power generation schedule and a state of charge target during a predefined time range. In particular, forecasts parameters are data and/or pieces of information relating to a scenario and/or a situation during the predefined time range. For example, the forecasts parameters provide information about the weather conditions in the region of the power plant during the predefined time range. The forecast parameters are therefore external constraints which influence the operation of the power plant.

In the present application, an optimization parameter is a parameter for improving or optimizing the performance of the power plant. Optimization parameters are, for example, power curtailment and the lifetime of the energy storage system.

The power generation schedule is defined as the power generated by the renewable power generation equipment during the predefined time. For example, the power generation schedule takes into account the amount of power that can be produced by wind turbines belonging to the power plant during the predefined time period.

The power injection schedule is defined as the power supplied by the power plant to the common point of connection during the predefined time range. The supplied power is composed by the power generated by the renewable power generation equipment and by the power provided (or absorbed) by the energy storage system.

According to the first aspect of present invention an optimized energy management and control method is proposed, based on the calculation and dispatch of optimized power and state of charge schedules. The schedules are calculated in order to achieve the power injection, while also minimizing the resource curtailment and maximizing the lifetime of the energy storage system by minimizing its charging and discharging cycles. To achieve this, a future power generation of the renewable power generation equipment is determined on the basis of external constraints, such as the weather forecast. A state of charge target schedule of the energy storage system is then determined, with the aim of improving the lifetime and the durability of the energy storage system. Finally, a power supply of the power plant to the common point of connection is determined and, according to the power injection schedule and to the state of charge target schedule, the composition of the supplied power, being the sum of the power generated from the renewable power generation equipment and of the power provided or absorbed from the energy storage system, is controlled.

Therefore, the lifetime of the energy storage system is improved and power curtailments are reduced.

According to an embodiment of the invention, the at least one optimization parameter is at least one of power curtailment, lifetime of the energy storage system. Therefore, in such a way, the determination of the state of charge target schedule and of the power injection schedule can be achieved with the aim of minimizing the power curtailment and maximizing the lifetime of the energy storage system.

According to an embodiment of the invention, the state of charge target schedule is further determined on the basis of the power injection schedule. In this way, it is therefore possible to optimize the lifetime of the energy storage system also on the basis of the power supplied to the common point of connection and, indirectly, by the power generation schedule. For example, a future generation peak due to favorable weather conditions (strong winds) can be taken into consideration for charging up the energy storage system, which can be then discharged during a subsequent period of adverse weather conditions (no wind).

According to an embodiment of the invention, the at least one type of the renewable power generation equipment comprises at least one wind turbine and/or at least a solar panel. In this case, the method allows to compensate the effects of weather conditions on the lifetime of the energy storage system by smoothing out power generation oscillations due to variable weather conditions.

Other types of renewable power generation equipment that can be comprised in the power plant include a turbine for the generation of hydroelectric power and/or a system for harvesting tidal power.

According to another embodiment of the invention, the forecasts parameters comprise weather forecast parameters. These comprise, in particular, wind speed, wind direction and/or sun irradiation in the region of the power plant. In particular, the weather forecasts parameters describe the weather conditions in the region of the power plant shortly before and/or during the predefined time range.

According to another embodiment, the forecasts parameters comprise financial parameters and/or a committed power injection schedule. Financial parameters can be, for example, an energy price or a variation of an energy price in time. By considering the energy price variation over time, a financial optimization of the operation of the power plant. For example, it is possible to supply more power to the grid when the energy price is high and to recharge the energy storage system when the energy price is low.

A committed power injection schedule is a power injection schedule received from a controller of the grid. The committed power injection schedule obliges the power plant to supply a predetermined amount of power to the common point of connection during the predefined time period. The committed power injection schedule represents therefore a minimum of the power that must be supplied from the power plant to the common point of connection during the predefined time period. The committed power injection schedule can also have an upper limit, representing a maximum power that can be supplied to the common point of connection during the predefined time range. Such upper limit might be equal or might be greater than the value established in the committed power injection schedule. By taking into consideration the committed power injection schedule as a forecast parameter, the state of charge target schedule is then determined by taking into consideration the minimum amount of power, that the power plant must supply to the common point of injection during the predefined time range, thus optimizing the lifetime of the energy storage system on the basis of a minimum power supply.

According to another embodiment, the at least one optimization parameter can be a committed power injection schedule. In such a way, the power injection schedule and the state of charge target schedule are determined in order to optimize the delivery of the committed power during the predefined time range.

According to another embodiment, the forecasts parameters comprise a present or a future availability of the renewable power generation equipment and/or a present value of the state of charge of the energy storage system.

In the present application, the availability of the renewable power generation equipment is defined as the renewable power generation equipment of the power plant, which can be used for generating power. It is for example possible, that part of the power generation equipment cannot be used shortly before and/or during the predefined time range, so that the power generation capacity of the renewable power generation equipment is reduced. By taking this into account, a more accurate power generation schedule and a more accurate state of charge target schedule can be determined.

According to another embodiment, during the predefined time range, the method further comprises the updating of the power generation schedule, the state of charge target schedule and the power injection schedule on the basis of updated forecasts parameters collected during the predefined time range. Accordingly, it is therefore possibly to recalculate the power generation schedule, the power injection schedule and the state of charge target schedule during the predefined time range in order to further optimize the lifetime of the energy storage system.

The updating can be performed only once during the predefined time range, for example after half of the predefined time range, or can be performed multiple times during the predetermined time range. If the updating is performed multiple times during the predetermined time range, then the updating can be performed at regular or irregular time intervals. In such a way, the state of charge target schedule is adapted to mutating external conditions, such as the weather and/or the energy pricing. The forecasts parameters and, consequently, the power generation schedule, the power injection schedule and the state of charge target schedule, should be updated as often as possible during the predefined time range, in order to better react to variable external conditions, which influence the power generation from the renewable power generation equipment.

According to another embodiment, the state of charge target schedule has a a constant value in time. This means, that the charge level of the energy storage system remains constant over the whole predefined time range. In this way, any cycle comprising a charging or discharging of the energy storage system is avoided through the whole predefined time range, thus improving the lifetime of the energy storage system.

It can however also be the case that the state of charge target defined by the state of charge target schedule for the predefined time range is not a constant value in time, but rather a variable one. This means that, on the basis of the forecasts parameters, the at least one optimization parameter and preferably of the power injection schedule, the state of charge target of the energy storage system is set to be a decreasing value and/or an increasing value during the predefined time range.

It might be for example the case, that, on the basis of the forecasts parameters and the at least one optimization parameter, during a first time period in the predefined time range the state of charge target is a decreasing value and in a second time period of the predefined time range the state of charge target is an increasing value. A state of charge target schedule with a variable state of charge target over the predefined time range is particularly useful to effectively compensate variable weather conditions and/or power peaks in the electrical grid, while optimizing the lifetime of the energy storage system.

According to another embodiment, the state of charge target schedule is a battery level range of the energy storage devices to be achieved. A battery level range is defined as a range comprised between a lower and an upper state of charge value. By controlling the state of charge within a specific range, the method only needs to correct the composition of the supplied power when the state of charge falls below the lower state of charge value or rises above the upper state of charge value.

According to another embodiment, during the predefined time range the method further comprises the following steps:
measuring a present value of the state of charge of the energy storage system;
comparing the present value of the state of charge with the state of charge target of the state of charge target schedule;
controlling the composition of the supplied power consisting of power from the renewable power generation equipment and the energy storage system also on the basis of the comparison between the present value of the state of charge and the state of charge target of the state of charge target schedule.

According to this embodiment, the method provides therefore for a fully closed feedback and regulation loop to finely control the state of charge of the energy storage system, so that the state of charge target established in the state of charge target schedule can be more effectively achieved, as the composition of the power supplied is changed accordingly to the comparison between a present value of the state of charge and the state of charge target of the state of charge target schedule. If, for example, the present state of charge is less than the one foreseen in the state of charge target schedule, the power supplied from the energy storage system is decreased. On the contrary, if a present state of charge value is higher than the one foreseen in the state of charge target, the power supplied from the energy storage system is increased.

According to a further embodiment, the method comprises, during the predefined time range, both the steps of recalculating the power generation schedule, the power injection schedule and the state of charge target schedule on the basis of updated forecasts parameters as well as the step of measuring a present value of the state of charge of the energy storage system, comparing the present value of the state of charge with the state of charge target of the state of charge target schedule and of controlling the composition of the supplied power consisting of power from the renewable power generation equipment and the energy storage system on the basis of the comparison between the present value of the state of charge and the state of charge target of the state of charge target schedule.

According to another embodiment, the method further comprises the following steps before the predefined time range:
transmitting the power injection schedule to a controller of the grid;
receiving a committed power injection schedule from the controller of the grid on the basis of the transmitted power injection schedule;
determining an adjusted power injection schedule on the basis of the committed power injection schedule, of updated forecasts parameters and of at least one optimization parameter.

Furthermore, the method further comprises the following steps during the predefined time range:
supplying the power of the power plant to the common point of connection on the basis of the adjusted power injection schedule,
controlling the composition of the supplied power consisting of power from the renewable power generation equipment and the energy storage system on the basis of the adjusted power injection schedule and the state of charge target schedule.

According to this embodiment, a power injection schedule is offered to a controller of the grid, which responds by sending a binding committed power injection schedule. On the basis of the binding committed power injection schedule, of updated parameters and of at least one optimization parameter, an adjusted power injection schedule is then determined. Preferably, an adjusted state of charge target schedule is also determined on the basis of the adjusted injection schedule, of the updated forecasts parameters and of at least one optimization parameter.

The adjusted power injection schedule must meet at least the power supply requested with the committed power injection schedule. If the committed power injection schedule allows it, it is also possible to supply more power, than the one defined in the committed power injection schedule. There might be an upper limit to the power supply or there might not be an upper limit to the power supply, thus allowing the method to supply to the common point of connection as much power as possible.

According to yet another embodiment of the invention, the method further comprises the step of activating and/or deactivating at least a part of the renewable power generation equipment of the power plant on the basis of a comparison between a measured current value of the state of charge and the state of charge target schedule.

According to a second aspect of the invention, an arrangement for managing a power plant is provided, wherein the power plant comprises a renewable power generation equipment, an energy storage system and a common point of connection connecting the renewable power generation equipment and the energy storage system with an electrical grid. The arrangement according to this aspect of the invention comprises an energy management system and a local plant controller.

The energy management system configured to:
determine a power generation schedule defining a power generation of the power plant during a predefined time range on the basis of forecasts parameters;
determine a state of charge target schedule of the energy storage system during the predefined time range on the basis of the forecasts parameters and of at least one optimization parameter; and
determine a power injection schedule of the power plant defining a power supply to the electrical grid during the predefined time range on the basis of the power generation schedule and of at least one optimization parameter.

The local plant controller configured to, during the predefined time range:
supply the power of the power plant to the common point of connection; and
control the composition of the supplied power consisting of power from the renewable power generation equipment and the energy storage system on the basis of the power injection schedule and the state of charge target schedule.

According to a particular embodiment of the invention, the energy management system comprises a bid forecast calculation unit and an engine unit.

The bid forecast calculation unit configured to:
determine a power generation schedule defining a power generation of the power plant during a predefined time range on the basis of forecasts parameters;
determine a state of charge target of the energy storage system during the predefined time range on the basis of the forecasts parameters and of at least one optimization parameter;
determine a power injection schedule of the power plant defining a power supply to the electrical grid during the predefined time range on the basis of the power generation schedule and of at least one optimization parameter; transmit the power injection schedule to a controller of the grid; and
receive a committed power injection schedule from the controller of the grid on the basis of the power injection schedule.

The engine unit configured to determine an adjusted power injection schedule on the basis of the committed power injection schedule, of updated forecasts parameters and of at least one optimization parameter. The committed power injection schedule can also be received from the engine unit.

In this embodiment, the local plant controller configured to control the composition of the supplied power consisting of power from the renewable power generation equipment and the energy storage system on the basis of the adjusted power injection schedule and the state of charge target schedule.

The bid forecast calculation unit according this embodiment can be configured to determine or calculate a power injection schedule and/or a state of charge target schedule and to offer them, through a controller of the grid, to the energy market. The power injection schedule and/or state of charge target schedule can be optimized, before being offered, to increase the financial revenues of the power plant (energy arbitrage) and/or to achieve specific state of charge target values (time shifting). If the offered power injection and/or the state of charge target schedule are not optimized before offering, they are determined on the basis of the forecasts parameters (natural forecast).

The engine unit, also called power deliver engine, according to this embodiment is activated when predictability is required. Predictability, also called capacity firming, is defined as the limitation of the supplied power by a lower and/or an upper limit. Predictability is often given as a parameter from a grid controller, which requires to the operator of the plant to inject a minimum and/or a maximum amount of power into the electrical grid during the predefined time range. During this stage, the power injection schedule and/or the state of charge target schedule are recalculated on the basis of updated forecasts data and of at least one optimization parameter, in order to meet the guaranteed/allowed power supply to the grid as established by the committed injection schedule received from the controller of the grid.

The engine unit can be configured to determine the adjusted power injection schedule on the basis of updated parameters, which are collected as close as possible to the predefined time range, for example 5 minutes before the beginning of the predefined time range. The engine unit furthermore determines the adjusted power injection schedule on the basis of at least one optimization parameter.

The engine unit can be configured to determine and adjusted state of charge target schedule on the basis of the updated forecasts parameters, of the adjusted power injection schedule and of at least one optimization parameter.

In such a way, deviations from the allowed injectable power, which might lead to penalizations for the operator of the power plant, are avoided and the energy storage system are optimized in view of the market requirements.

According to this embodiment it is therefore possible for power plants with renewable power generation equipment, which power output depends on external factors such as the weather, provided with storage equipment to present the characteristics of a traditional or dispatchable power plant, where it is possible to choose an optimal power injection during a predefined time range and deliver it accordingly.

According to a further embodiment, the bid forecast calculation unit is configured to update the power injection schedule and the state of charge target schedule during the predefined time range at regular or irregular intervals. In this way, the arrangement can better react to mutating external factors, which influence the power generation through the renewable power generation equipment.

Also the engine unit can be configured, to update the adjusted power injection schedule and/or the adjusted state of charge target schedule at regular or irregular time intervals during the predefined time range.

According to a third aspect of the invention, a power plant is provided with at least an arrangement as described above.

It is noted, that the arrangement according to the second aspect of the present invention may include any of the features disclosed in the method according to the first aspect of the invention and that, vice versa, the method according to the first aspect of the invention may include any of the features disclosed in the arrangement according to the second aspect of the invention.

### Brief Description of the Drawing

Figure 1 shows a power plant according to an exemplary embodiment of the invention.
Figure 2 shows an arrangement according to an exemplary embodiment of the invention.
Figure 3 shows an arrangement according to another exemplary embodiment of the invention, wherein the energy management system comprises a bid forecast calculation unit and an engine unit.
Figure 4a and 4b show passible, schematical ways of functioning of the arrangement.
Figure 5 shows a schematically representation of a method according to the present invention.

### Detailed Description

The illustration in the drawing is schematically. It is noted that in different figures, similar or identical elements are provided with the same reference signs or with reference signs, which are different from the corresponding reference signs only within the first digit.

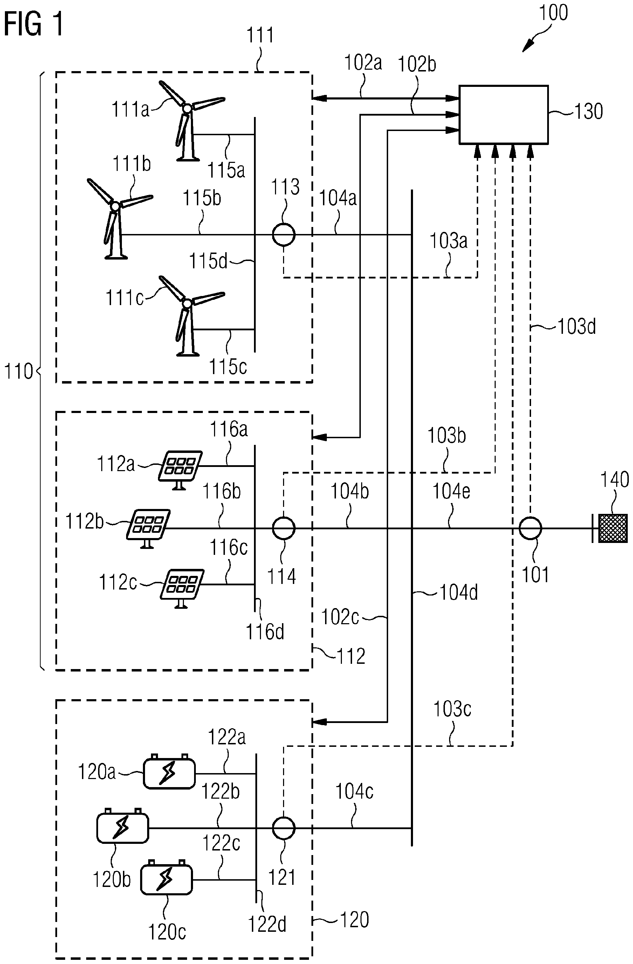

**Figure 1** shows a power plant 100 according to an embodiment of the present invention. The power plant 100 comprises renewable power generation equipment 110, an energy storage system 120 and an arrangement 130 for managing the power plant 100. The power plant 100 is connected to an electrical grid 140 via a common point of connection 101. In the present embodiment, the renewable power generation equipment 110 is of two types: on the one side there are wind turbines 111a, 111b, 11bc forming a wind power park 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind park connection point 113, which electrically connects the wind turbines 111a, 111b, 111c to the power lines 104a, 104d, 104e and through these to the common point of connection 101, so that the electrical energy produced in the wind park 111 can be distributed to the grid 140.

In a similar fashion, the solar panels 112a, 112b, 112c are electrically connected via power lines 116a, 116b, 116c respectively to a power line 116d and through the power line 116d to a solar park connection point 114, which electrically connects the solar panels 112a, 112b, 112c to the power lines 104b, 104d, 104e and through these to the common point of connection 101, so that the electrical energy produced in the solar energy park 112 can be distributed to the grid 140.

The energy storage system 120 includes a number of batteries 120a, 120b, 120c. These are electrically connected via power lines 122a, 122b, 122c to a power line 122d and through this to an energy storage system connection point 121. The energy storage system connection point 121 connects the energy storage system 120 with power lines 104c, 104d of the power plant 100. When the batteries are being discharged, power is supplied from the energy storage system 120 through the energy storage system connection point 121 to the power lines 104c, 104d, 104e and through these to the common point of connection 101 and finally to the grid 140. When the batteries are being charged, then power is supplied from the wind park 111 and/or the solar energy park 112 through power lines 104d, 104c to the energy storage system connection point 121 and through this to the power lines connecting the energy storage system connection point 121 with the batteries 120a, 120b and 120c for charging them.

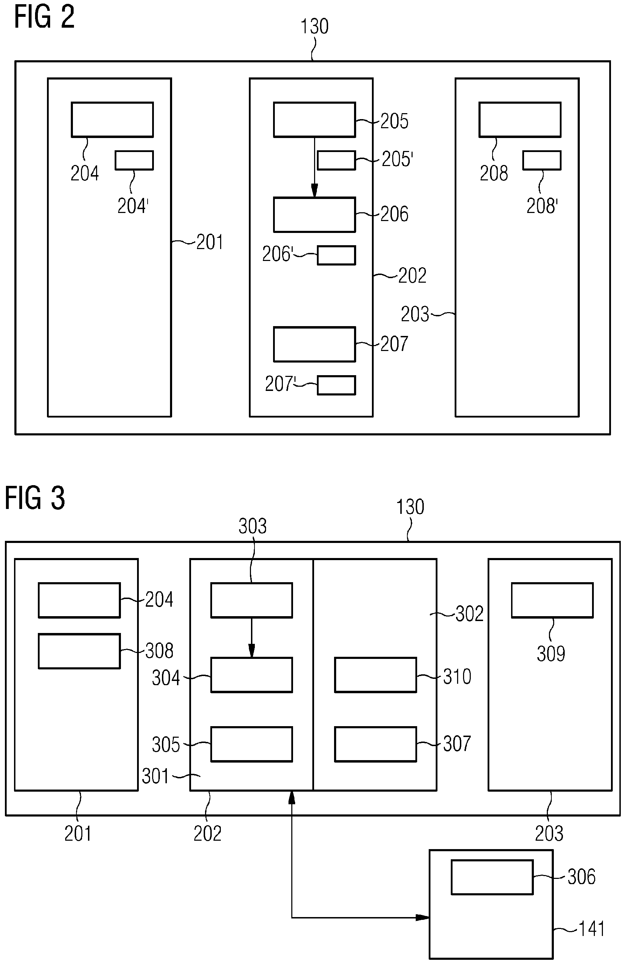

The arrangement 130, which is described in detail in **Figure 2,** controls via feedback and regulation loops, represented by the lines 102a, 102b, 102c, the wind park 111, the solar energy park 112 and the energy storage system 120. In particular, each of these three components of the power plant 100 are separately controlled and regulated by the arrangement 130. In particular, the arrangement 130 is configured to regulate the power, connect or disconnect any of the wind turbines 111a, 11b, 11c and/or solar panels 112a, 112b, 112c.

If a wind turbine or a solar panel is connected, then it provides electrical power to be distributed to either the grid 140 or the energy storage system 120. On the contrary, if a solar panel is disconnected, then it does not provide electrical power to either the grid 140 or the energy storage system 120.

The arrangement 130 is also configured to regulate the power supply or completely connect or disconnect the whole wind park 111 and/or the whole solar energy park 112 by enabling or disabling the power distribution through the wind park connection point 113 or the solar park connection point 114. To control the wind park connection point 113 and the solar park connection point 114, dedicated signal lines 103a and 103b are provided, these signals are sent to each wind and solar generation resource's controller as power reference setpoints for each of its power regulators.

Furthermore, the arrangement 130 is configured to regulate the power flow, connect or disconnect the energy storage system 120. If the energy storage system 120 is connected, then the batteries 120a, 120b, 120c can either be charged or discharged, depending on the settings provided by the arrangement 130 for controlling the energy storage system connection point 121. The arrangement 130 controls the energy storage system connection point 121 via a dedicated signal line 103c. It might also be the case, that one or more batteries are connected and one or more are disconnected, so that the batteries 120a, 120b, 120c can be controlled separately by the arrangement 130. Also, the arrangement 130 is configured to control the common point of connection 101 via a dedicated signal line 103d, where these signals are sent to the storage system's controller as power reference setpoints.

It is herewith specified, that each of the connection points 113, 114, 121 and the common point of connection 101 are not only for fully connecting or fully disconnecting two power lines or the power line 104e and the grid 140, but that they can also partially connect or partially disconnect two power lines or the power line 104e and the grid 140, thus allowing a reduced amount of electrical power to be transmitted through it. Besides the connection and disconnection of the power lines, the signals transmitted through 103a, 103b, 103c are sent to each wind, solar generation and storage resource's controller as power reference setpoints for each of its power regulators.

From **Figure 1** it is clear, how the arrangement 130 controls the whole power plant 100 and the power supply of the same to the common point of injection 101. The supplied power and its composition, being the sum of the power generated by the renewable power generation equipment 110 and the power coming from the energy storage system 120, is also controlled by the arrangement 130 with the aim of, on the side, meeting a request for the supplied power and, on the side, optimize the lifetime of the energy storage system 120 by minimizing its charging and discharging cycles on the base of external factors, which influence the power generation and the power consumption.

**Figure 2** shows the arrangement 130 in a detailed manner. The arrangement 130 comprises a forecast service system 201, an energy management system 202 and a local plant controller 203.

The forecast service system 201 retrieves forecasts parameters 204, such as weather forecast data, from sources which are external to the arrangement 130, such as the internet. The forecasts parameters 204 are then passed to the energy management system 202.

The energy management system 202 is configured to, on the basis of the forecasts parameters 204, to determine a power generation schedule 205 of the power plant 100 during a predefined time range. Furthermore the energy management system 202 determines a state of charge target schedule 207 of the energy storage system 120 during the predefined time range on the basis of the forecasts parameters 204 and of at least one optimization parameter, such as the lifetime of the energy storage system 120 or the power curtailment.

Furthermore, the energy management system 202 also determines a power injection schedule 206 of the power plant 100 during the predefined time range. The power injection schedule 206 defines a power supply of the power plant 100 to the electrical grid 140 during the predefined time range. The power injection schedule 206 is determined on the basis of the power generation schedule 205 and on the basis of at least one optimization parameter.

In a preferred embodiment of the invention, the state of charge target schedule 207 is determined by the energy management system 202 after the power injection schedule 206 and the state of charge target 207 schedule is determined not only on the basis of the forecasts parameters 204 and of at least one optimization parameter but also on the basis of the power injection schedule 206.

The energy management system 202 then transmits the power injection schedule 206 and the state of charge target schedule 207 to the local plant controller 203. The local plant controller 203 receives both the power injection schedule 206 and the state of charge target schedule 207 and saves them together as a target schedule 208.

During the predefined time range, the local plant controller 203 supplies the power to the common point of connection 101, and thus to the grid 140, and controls the composition of the supplied power consisting of power from the renewable power generation equipment 110 and the energy storage system 120 on the basis of the target schedule 208, that is on the basis of both the power injection schedule 206 and the state of charge target schedule 207.

The energy management system 202 can also be configured to retrieve, during the predefined time range, updated forecasts parameters 204' from the forecast service system 201. On the basis of the updated forecasts parameters 204', the energy management system can update the power generation schedule 205, the power injection schedule 206 and the state of charge target schedule 207. The updated power injection schedule 206', determined on the basis of the updated power generation schedule 205', and the updated state of charge target schedule 207' are transmitted to the local plant controller 203, where they are saved as an updated target schedule 208'. The updated target schedule 208' is then used for supplying the power to the common point of connection 101 and to control the composition of the supplied power formed by the power determined by the renewable power generation equipment 110 and by the power supplied by the energy storage system 120. In this way, mutable weather and/or economic conditions might be taken into account and might be used for optimizing the lifetime of the energy storage system 120.

**Figure 3** shows another exemplary embodiment of the energy management system 202 comprised in the arrangement 130 of Figure 2.

According to this embodiment, the energy management system 202 comprises a bid forecast calculation unit 301 and an engine unit 302. The bid forecast calculation unit 301 determines a power generation schedule 303 on the basis of the forecasts parameters 204. The bid forecast calculation unit 301 is also configured to determine a state of charge target schedule 305 of the energy storage system 120 during the predefined time range on the basis of the forecasts parameters 204 and of at least one optimization parameter. Furthermore, a power injection schedule 304 is determined on the basis of the power generation schedule 303 and of at least one optimization parameter. Such power injection schedule 304 is transmitted from the energy management system 202 to a controller of the grid 141.

In the bid forecast calculation unit 301, therefore, a power injection schedule 304 is determined and offered to the electrical grid 140, that is to the electrical market. The electrical market can then either accept the power injection schedule 304 as transmitted by the energy management system 202 or request a different power supply during the predefined time range, as the one determined in the power injection schedule 304.

The energy management system 202 receives then from the controller of the grid 141 a committed power injection schedule 306. The committed power injection schedule 306 defines the minimum power that the power plant 100 has to supply to the common point of connection 101 during the predefined time range. The committed power injection schedule 306 may also have an upper limit defining the maximum power that the power plant 100 can supply to the common point of connection 101 during the predefined time range. Such upper limit might be identical with the minimum power supply defined by the committed power injection schedule 306 or might differ from it.

The engine unit 302 of the power management systems determines then an adjusted power injection schedule 307 on the basis of the committed power injection schedule 306, the updated forecasts parameters 308, at least one optimization parameter, and, optionally, the plant's status.

The adjusted power injection schedule 307 and the state of charge target schedule 305 are then transmitted from the energy management system 202 to the local plant controller 203, where they form a target schedule 309, on which basis the composition of the power supplied by the power plant 100 to the common point of connection 101 is controlled.

According to a preferred embodiment, the engine unit 302 determines also an adjusted state of charge target schedule 310 on the basis of the updated parameters 308, at least one optimization parameter and of the adjusted power injection schedule 307. In such a way, the state of charge target schedule of the energy storage system 120 can be optimized on the basis of the adjusted power injection schedule 307, thus achieving the committed power injection schedule 306 and improving the lifetime of the energy storage system 120 while minimizing the curtailment of the resource.

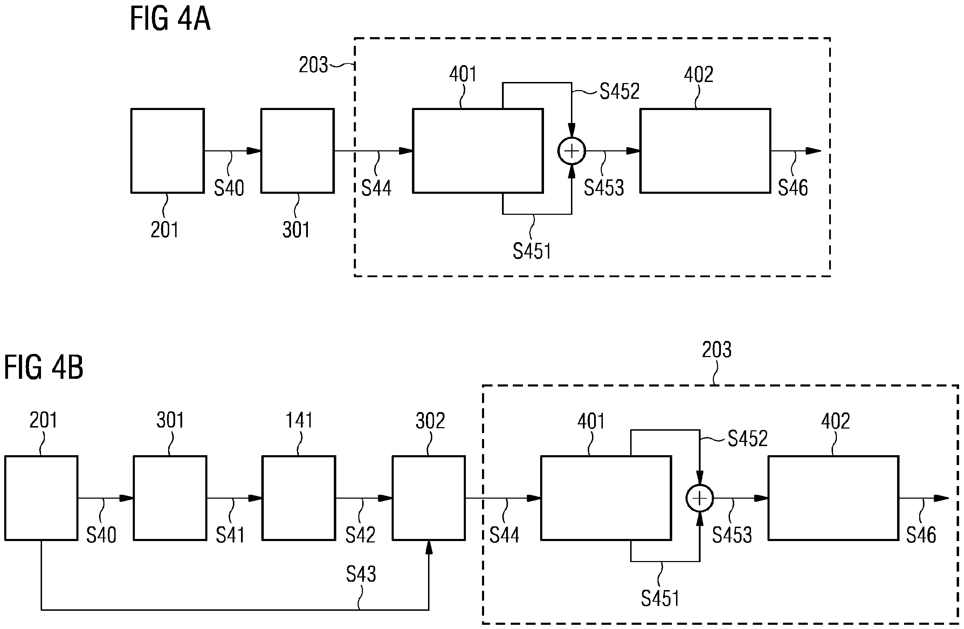

**Figure 4a** and **4b** show possible, schematical ways of functioning of the arrangement 130.

In **Figure 4a** the forecast service system 201 provides forecasts parameters 204 to the bid forecast calculation unit 301 of the energy management system 202 (step S40). The forecasts parameters 204 can include a power generation forecast on the basis of weather forecast parameters (natural forecast), a price forecast for the energy price (financial forecast) or a state of charge objective (time shifting) of the energy storage system 120. The bid forecast calculation unit 301 determines a power generation schedule 205 on the basis of the forecasts parameters 204. It also determines a state of charge target schedule 207 on the basis of the forecasts parameters 204 and of least one optimization parameter. Finally, it also determines a power injection schedule 206 on the basis of the power generation schedule 205 and of at least one optimization parameter (step S44). The state of charge target schedule 207 and the power injection schedule 206, together with, if necessary, power injection bounds defining a lower or an upper limit of the power injection to the common point of connection 101, are sent to the local plant controller 203 (also step S44). The local plant controller has a state of charge target unit 401, configured to control the composition of the supplied power, defined by the power injection schedule 206, from the energy storage system 120 (step S451) and from the renewable power generation equipment (step S452) and to add them (step S453) to compute the supplied power. A grid power regulation unit 402 regulates then the supplied power to the common point of connection 101 in accordance with any possible limiting requirements imposed by the controller of the grid 141 (S46).

According to **Figure 4b**, the forecast service system 201 provides forecasts parameter 204 to the bid forecast calculation unit (step S40). The forecasts parameters 204 can include a power generation forecast on the basis of weather forecast parameters (natural forecast), a price forecast for the energy price (financial forecast) or a state of charge objective (time shifting) of the energy storage system 120. The bid forecast calculation unit 301 determines a power generation schedule 205. It further determines, on the basis of the power generation schedule 205 and of at least one optimization paramter, a power injection schedule 206, which is transmitted to a controller 141 of the grid 140 (step S41). The controller 141 of the grid 140 may also be a user or a trader acting on the energy market. The controller 141 of the grid 140 sends to the engine unit 302 a committed power injection schedule 306 (step S42), which may or may not have a maximum allowable injectable power. The engine unit 302 determines then on the basis of the committed power injection schedule 306, of updated forecasts parameters 308 provided by the forecast service unit in step S43 and of at least one optimization parameter an adjusted state of charge target 310 and an adjusted power injection schedule 307, which are transmitted to the local plant controller 203 together with any maximum allowable injectable power, if provided (step S44). The local plant controller controls through the state of charge target unit 401 the composition of the supplied power, defined by the adjusted power injection schedule 307, from the energy storage system 120 (step S451) and from the renewable power generation equipment (step S452) and to add them (step S453) to compute the supplied power. The grid power regulation unit 402 regulates then the supplied power to the common point of connection 101 in accordance with any possible limiting requirements imposed by the grid controller 141 (S46).

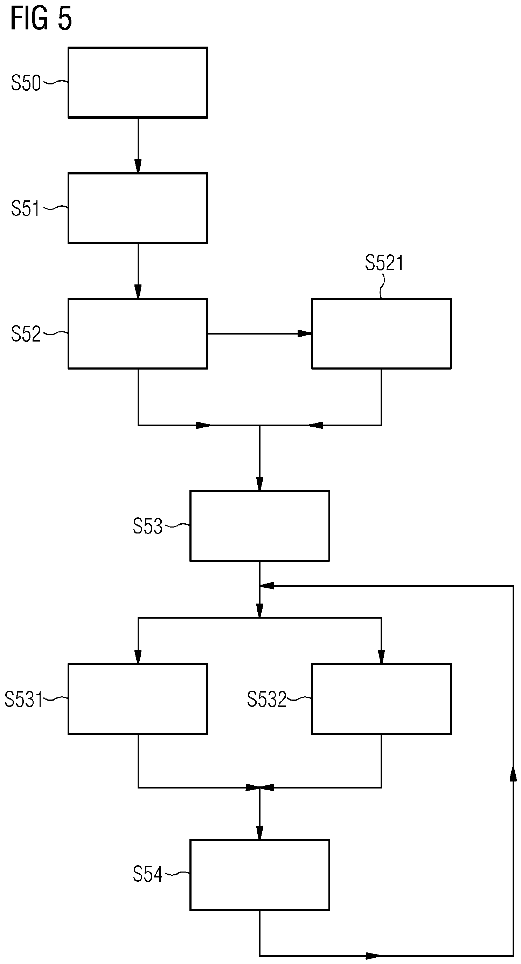

**Figure 5** shows, schematically, a method of power management of the power plant 100 according to the invention.

In a first step S50 forecasts parameters 204 are collected from the forecast service system 201.

The forecasts parameters 204 can be of different types. It is for example possible, that the forecasts parameters 204 are weather forecasts data for the region in which the power plant 100 is situated. For example, the forecasts parameter 204 can relate to wind speed, wind direction, precipitations and/or solar irradiation. If the renewable power generation equipment 110 comprises a system for harvesting tidal energy, the forecasts parameters 204 can also provide information about the tides.

The forecasts parameters 204 can however also relate to financial data, such as the energy price, and/or to parameters providing information about the energy market, such as the requested power supply or a power injection schedule, that the operator of the power plant 100 committed to the controller of the grid 141 in a process of bid offering.

Also, the forecasts parameters 204 can provide information about the power plant 100. In particular, the forecasts parameters 204 can relate to the state of charge of the energy storage system 120 and/or to the availability of one or more parts of the renewable power generation equipment 110.

The forecasts parameters 204 can relate to a present time range. It is however preferable, that the forecasts parameters 204 relate to information during the predefined time range.

In a second step S51, the energy management system 202 determines a power generation schedule 205 on the basis of the forecasts parameters 204 for the predefined time range.

In a third step S52, the energy management system 202 determines a power injection schedule 206 on the basis of the power generation schedule 205 and of at least one optimization parameter, such as the lifetime of the energy storage system 120 or the power curtailment, for the predefined time range. Furthermore, in the same step, the energy management system 202 also determines a state of charge target schedule 207 on the basis of the forecasts parameter 204 and on of at least one optimization parameter for the predefined time range.

In a preferred embodiment, the state of charge target schedule 207 is also determined on the basis of the power injection schedule 206 (step S521), in order to better account in the state of charge target schedule 207 the power injection schedule 206 determining the power that must be supplied from the power plant 100 during the predefined time range.

The state of charge target schedule 207 determined in step S52 or step S521 can have a constant value for the whole predefined time range, for example a certain amount of the state of charge of the energy storage system 120 that has to maintained. It can also be the case, that the state of charge target schedule 207 is a range having a minimum and a maximum value. In this case, the method allows the charge level of the energy storage system 120 to move within certain boundaries.

It could also be the case, that the state of charge target schedule 207 has not a constant value over the predefined time range, but rather a variable one. In this case, the method takes into account variable conditions, which determine a variable output of the renewable power generation equipment 110, such as variable weather conditions and/or variable energy prices. It can, for example, be the case that the state of charge target schedule 207 has a declining value of the state of charge during a first time period of the predefined time range and a rising value in a second time period, which comes after the first one, of the predefined time range.

In a fourth step S53, both the power injection schedule 206 and the state of charge target schedule 207, which together form a target schedule 208, are used by the local plant controller 203 to supply the power to the common point of connection 101 according to the power injection schedule 206 (step S531) and to control the composition of the supplied power on the basis in such a way, that the energy storage system 120 reaches the state of charge target schedule 207 (step S532).

According to an embodiment of the invention, during the predefined time period, updated forecasts parameters 204' are collected by the forecast service system 201 and are elaborated by the energy management system 202 to determine an updated power generation schedule 205'. On its basis and on the basis of at least one optimization parameter, an updated power injection schedule 206' is determined. Furthermore, an updated state of charge target schedule 207' is also determined on the basis of the updated parameters 204', of at least one optimization parameter, and preferably also on the basis of the updated power injection schedule 206'. The updated power injection schedule 206' and the updated state of charge target schedule 207', forming together an updated target schedule 208' are passed to the local plant controller 203, which then supplies the power from the power plant 100 to the common point of connection 101 and controls the composition of the supplied power according to the updated target schedule 208' .

In this case, the steps S50 to S532 are repeated each time that the forecasts parameters are updated.

The updated target schedule 208' can be provided at regular or irregular time intervals during the predefined time range.

According to **Figure 5**, the method has finally a feedback and regulating step S54, in which a present value of the state of charge is measured and compared with the state of charge target of the state of charge target schedule 207. If necessary, the composition of the supplied power is regulated on the basis of the result of the comparison. That is, if the present state of charge is smaller than the one foreseen by the state of charge target schedule 207, the energy storage system 120 is charged. On the contrary, if the present value of the state of charge is higher than the one foreseen by the state of charge target schedule 207, then the energy storage system 120 discharged.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method of power management of a power plant (100) comprising at least one type of renewable power generation equipment (110) and an energy storage system (120), wherein the power plant (100) comprises one common point of connection (101) connecting the renewable power generation equipment (110) and the energy storage system (120) with an electrical grid (140), the method comprising:
determining a power generation schedule (205) defining a power generation of the power plant (100) during a predefined time range on the basis of forecasts parameters (204);
determining a state of charge target schedule (207) of the energy storage system (120) during the predefined time range on the basis of the forecasts parameters (204) and of at least one optimization parameter;
determining a power injection schedule (206) of the power plant (100) defining a power supply to the electrical grid (140) during the predefined time range on the basis of the power generation schedule (205) and of at least one optimization parameter;
wherein in the predefined time range the method comprises:
supplying the power of the power plant (100) to the common point of connection (101) on the basis of the power injection schedule (206),
controlling the composition of the supplied power consisting of power from the renewable power generation equipment (110) and the energy storage system (120) on the basis of the power injection schedule (206) and the state of charge target schedule (207).

2. The method according to claim 1, wherein the state of charge target schedule (207) is also determined on the basis of the power injection schedule (206).

3. The method according to claim 1 or 2, wherein the at least one type of renewable power generation equipment (110) comprises at least one wind turbine (111a, 111b, 111c) and/or at least a solar panel (112a, 112b, 112c).

4. The method according to any of the preceding claims, wherein the forecasts parameters (204) comprise weather forecast parameters, in particular wind speed, wind direction and/or sun irradiation in the region of the power plant (100) .

5. The method according to any of the preceding claims, wherein the forecasts parameters (204) comprise financial parameters and/or a committed power injection schedule.

6. The method according to any of the preceding claims, wherein the forecasts parameters (204) comprise a present availability of the renewable power generation equipment (110) and/or a present value of the state of charge of the energy storage system (120).

7. The method according to any of the preceding claims, wherein, during the predefined time range, the method further comprises:
updating the power generation schedule (205), the state of charge target schedule (207) and the power injection schedule (206) on the basis of updated forecasts parameters (204') collected during the predefined time range.

8. The method according to claim 7, wherein the updating is performed at regular or irregular time intervals.

9. The method according to any of the preceding claims, wherein the state of charge target schedule (207) has a constant value in time.

10. The method according to any of the preceding claims, wherein the state of charge target schedule (207) is a battery level range of the energy storage devices (120) to be achieved.

11. The method according to any of the preceding claims, wherein in the predefined time range the method further comprises:
measuring a present value of the state of charge of the energy storage system (120);
comparing the present value of the state of charge with the one according to the state of charge target schedule (207);
controlling the composition of the supplied power consisting of power from the renewable power generation equipment (110) and the energy storage system (120) on the basis of the comparison between the present value of the state of charge and the one according to the state of charge target schedule (207).

12. The method according to any of the preceding claims, wherein the method further comprises:
before the predefined time range:
transmitting the power injection schedule (304) to a controller (141) of the grid (140);
receiving a committed power injection schedule (306) from the controller (141) of the grid (140) on the basis of the transmitted power injection schedule (206);
determining an adjusted power injection schedule (307) on the basis of the committed power injection schedule (306), of updated forecasts parameters (308) and of at least one optimization parameter;
during the predefined time range the method comprises:
supplying the power of the power plant (100) to the common point of connection (101) on the basis of the adjusted power injection schedule (307),
controlling the composition of the supplied power consisting of power from the renewable power generation equipment (110) and the energy storage system (120) on the basis of the adjusted power injection schedule (307) and the state of charge target schedule (305).

13. Arrangement (130) for managing a power plant (100), wherein the power plant (100) comprises a renewable power generation equipment (110), an energy storage system (120) and a common point of connection (101) connecting the renewable power generation equipment (110) and the energy storage system (120) with an electrical grid (140), wherein the arrangement comprises:
an energy management system (202) configured to:
determine a power generation schedule (205) defining a power generation of the power plant (100) during a predefined time range on the basis of forecasts parameters (204) ;
determine a state of charge target schedule (207) of the energy storage system (120) during the predefined time range on the basis of the forecasts parameters (204) and of at least one optimization parameter; and
determine a power injection schedule (206) of the power plant (100) defining a power supply to the electrical grid (140) during the predefined time range on the basis of the power generation schedule (205) and of at least one optimization parameter;
a local plant controller (203) configured to:
supply the power of the power plant (100) to the common point of connection (101) on the basis of the power injection schedule (206); and
control the composition of the supplied power consisting of power from the renewable power generation equipment (110) and the energy storage system (120) on the basis of the power injection schedule (206) and the state of charge target schedule (207);
during the predefined time range.

14. Arrangement (130) according to claim 13, wherein the energy management system (202) comprises:
a bid forecast calculation unit (301) configured to:
determine a power generation schedule (303) defining a power generation of the power plant (110) during a predefined time range on the basis of forecasts parameters (204);
determine a state of charge target schedule (305) of the energy storage system (120) during the predefined time range on the basis of the forecasts parameters (204) and of at least one optimization parameter;
determine a power injection schedule (304) of the power plant (100) defining a power supply to the electrical grid (140) during the predefined time range on the basis of the power generation schedule (303) and of at least one optimization parameter;
transmit the power injection schedule (304) to a controller (141) of the grid (140); and
receive a committed power injection schedule (306) from the controller (141) of the grid (140) on the basis of the power injection schedule (304);
an engine unit (302) configured to determine an adjusted power injection schedule (307) on the basis of the committed power injection schedule (306), of updated forecasts parameters (308) and of at least one optimization parameter; wherein the local plant controller (203) configured to control the composition of the supplied power consisting of power from the renewable power generation equipment (110) and the energy storage system (120) on the basis of the adjusted power injection schedule (307) and the state of charge target schedule (305).

15. Power plant (100) comprising at least one type of renewable power energy equipment (110), an energy storage system (120) and an arrangement (130) according to claim 13 or 14.
